# EUROPÄISCHE PATENTSCHRIFT

(11) **EP 3 810 448 B1**
(45) Veröffentlichungstag und Bekanntmachung des Hinweises auf die Patenterteilung: **16.11.2022**
(21) Anmeldenummer: 19732246.4
(22) Anmeldetag: 04.06.2019
(51) Int. Cl.: B60K 6/40, B60K 6/442, B60K 6/387, F16H 57/04, F16H 61/00

(54) **ANTRIEBSEINHEIT FÜR EINEN ANTRIEBSSTRANG EINES ELEKTRISCH ANTREIBBAREN KRAFTFAHRZEUGS SOWIE DAMIT AUSGESTATTETE ANTRIEBSANORDNUNG**
DRIVE UNIT FOR A DRIVE TRAIN OF AN ELECTRICALLY DRIVABLE MOTOR VEHICLE AND DRIVE ARRANGEMENT HAVING SAID DRIVE UNIT
UNITÉ D'ENTRAÎNEMENT DESTINÉE À LA CHAÎNE CINÉMATIQUE D'UN VÉHICULE AUTOMOBILE À ENTRAÎNEMENT ÉLECTRIQUE ET SYSTÈME D'ENTRAÎNEMENT MUNI DE LADITE UNITÉ D'ENTRAÎNEMENT

(30) Priorität: 20.06.2018 DE 102018114789
(43) Veröffentlichungstag der Anmeldung: 28.04.2021
(73) Patentinhaber: Schaeffler Technologies AG & Co. KG, 91074 Herzogenaurach (DE)
(72) Erfinder: TRINKENSCHUH, Andreas, 77815 Bühl (DE); LEHMANN, Steffen, 76275 Ettlingen (DE); MAYER, Carsten, 97816 Lohr a. Main (DE); GRETHEL, Marco, 77830 Bühlertal (DE)
(86) Internationale Anmeldenummer: PCT/DE2019/100493
(87) Internationale Veröffentlichungsnummer: WO 2019/242803

(56) Entgegenhaltungen:
- DE-B3-102016 211 226
- DE-C1- 10 154 147
- JP-A- 2013 121 788
- US-A- 5 845 731

## Beschreibung

Die Erfindung betrifft eine Antriebseinheit für einen Antriebsstrang eines elektrisch antreibbaren Kraftfahrzeugs sowie eine Antriebsanordnung, die die erfindungsgemäße Antriebseinheit umfasst.

Aus dem Stand der Technik sind Antriebseinrichtungen für ein Hybridfahrzeug bekannt, welche unter anderem eine Verbrennungskraftmaschine, eine erste elektrische Maschine sowie eine zweite elektrische Maschine umfassen.

Die DE 10 2015 222 690 A1, DE 10 2015 222 691 A1 sowie WO 2017 084 887 A1 beschreiben dazu Verfahren zum Steuern einer derartigen Antriebseinrichtung, wobei die Antriebseinrichtung in mehreren Betriebsmodi betreibbar ist.

In der DE 10 2015 222 690 A1 wird vorwiegend ein serieller Hybridbetrieb erläutert, in dem das Fahrantriebsdrehmoment mittels der zweiten Elektromaschine bewirkt wird und die Verbrennungskraftmaschine die erste Elektromaschine zur Erzeugung von elektrischer Energie antreibt. Beschrieben ist, wie die Verbrennungskraftmaschine in einem Arbeitspunkt betrieben wird, wobei ein kombinierter Wirkungsgrad der Antriebseinrichtung von dem Wirkungsgrad der Verbrennungskraftmaschine und von dem Wirkungsgrad der ersten Elektromaschine abhängt.

In den Dokumenten DE 10 2015 222 691 A1 und WO 2017 084 887 A1 werden ein leistungsorientierter sowie ein verbrauchsorientierter Modus beschrieben, wobei ein jeweiliger Modus von einer Bedingung abhängig ist. Diese Bedingung umfasst, dass ein Sollantriebswert auf einen Zwischenwert erhöht wird, der zwischen einer Verbrennungskraftmaschine-Schwelle, die einen maximalen Antriebswert in einem parallelen Hybridbetrieb repräsentiert, in dem ausschließlich die Verbrennungskraftmaschine ein Fahrantriebsdrehmoment bewirkt, und einer Parallelhybridbetrieb-Schwelle, die einen maximalen Antriebswert in dem parallelen Boost-Hybridbetrieb repräsentiert, liegt.

Die DE 10 2015 222 692 A1, WO 2017 084 888 A1, DE 10 2015 222 694 A1 sowie WO 2017 084 889 A1 beschreiben ein Verfahren zum Betreiben einer Antriebseinrichtung eines Hybridfahrzeugs zum Antreiben eines Antriebsrads, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst.

In der DE 10 2015 222 692 A1 sowie der WO 2017 084 888 A1 wird beschrieben, dass die Antriebseinrichtung in einem von drei Betriebsmodi betrieben wird, nämlich in einem rein elektrischen Betrieb, einem seriellen Hybridbetrieb oder einem parallelen Hybridbetrieb, wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht.

DE 10 2015 222 694 A1 und WO 2017 084 889 A1 offenbaren, dass zwischen der Verbrennungskraftmaschine und dem Antriebsrad weiterhin ein Getriebe angeordnet ist.

Des Weiteren beschreibt ein jeweiliges genanntes Dokument ein Hybridfahrzeug, welches eine Hybrid-Antriebseinrichtung aufweist.

Das im Stand der Technik wiederholt beschriebene Hybridfahrzeug umfasst eine Verbrennungskraftmaschine, eine erste sowie zweite elektrische Maschine, zumindest ein Antriebsrad, eine Hauptkupplung sowie eine erste und eine zweite Kupplung. Die Hauptkupplung ist dabei zwischen der Verbrennungskraftmaschine und einem Antriebsrad angeordnet, die erste Kupplung ist zwischen der ersten elektrischen Maschine und einer Ausgangswelle der Verbrennungskraftmaschine vorgesehen und die zweite Kupplung ist zwischen der zweiten elektrischen Maschine und einem Antriebsrad vorgesehen.

Aus der (noch nicht veröffentlichten) DE 10 2017 128 289.0 ist eine Antriebseinheit für einen Antriebsstrang eines Hybridkraftfahrzeuges bekannt, mit einer Verbrennungskraftmaschine, einer ersten elektrischen Maschine, einer zweiten elektrischen Maschine, einer ersten Übersetzungsstufe und einer Triebwelle der ersten elektrischen Maschine und/oder der zweiten elektrischen Maschine. Des Weiteren umfasst die Antriebseinheit eine Getriebeteileinheit, über die die Triebwelle der jeweiligen elektrischen Maschine mit Radantriebswellen gekoppelt oder koppelbar ist. Eine zweite Übersetzungsstufe ist mit einer Vorgelegeeinheit gekoppelt, wobei die Vorgelegeeinheit eine integrierte Kupplung aufweist und so mit den Radantriebswellen weiter verbunden ist, dass in Abhängigkeit der Stellung dieser Kupplung die Verbrennungskraftmaschine über die zweite Übersetzungsstufe mit den Radantriebswellen koppelbar ist.

Die ebenfalls noch nicht veröffentlichte DE 10 2017 127 695.5 lehrt einen Antriebsstrang für ein Hybridkraftfahrzeug, welcher eine Getriebeeingangswelle aufweist, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht. Die zweite elektrische Maschine ist dauerhaft mit der Getriebeeingangswelle drehmomentübertragend verbunden und die erste elektrische Maschine und die Verbrennungskraftmaschine sind koppelbar zur Drehmomentübertragung mit der Getriebeeingangswelle verbindbar. Dabei kann
die erste elektrische Maschine und/oder die zweite elektrische Maschine gekühlt ausgeführt sein. Besonders ist es bevorzugt, wenn die Kühlung mittels einer Wasserkühlung aus einem Fahrzeug-Kühlkreis oder mittels einer Ölkühlung mit Getriebeöl aus dem Getriebe heraus ausgebildet ist. Weiterhin kann auch die eingesetzte Trennkupplung als eine ölgekühlte Lamellenkupplung ausgebildet sein.

Die US 5,845,731 A offenbart eine Antriebseinheit mit zwei elektrischen Maschinen und einem Strömungssystem zu deren Kühlung.

Die DE 101 54 147 C1 offenbart eine Antriebseinheit mit zwei elektrischen Maschinen und einer Trennkupplung sowie ein Strömungssystem zur gemeinsamen Kühlung einer der elektrischen Maschinen und der Trennkupplung.

Der Erfindung liegt die Aufgabe zugrunde, eine Antriebseinheit für einen Antriebsstrang eines elektrisch antreibbaren Kraftfahrzeugs sowie eine damit ausgestattete Antriebsanordnung zur Verfügung zu stellen, von denen einzelne Komponenten, insbesondere elektrische Maschinen, in optimaler Weise kühlbar sind und demzufolge verschleißgemindert betreibbar sind.

Diese Aufgabe wird durch die erfindungsgemäße Antriebseinheit nach Anspruch 1 sowie durch die erfindungsgemäße Antriebsanordnung nach Anspruch 6 gelöst.

Vorteilhafte Ausgestaltungen der Antriebseinheit sind in den Unteransprüchen 2-5 angegeben. Vorteilhafte Ausgestaltungen der Antriebsanordnung sind in den Unteransprüchen 7 und 8 angegeben.

Die Erfindung betrifft eine Antriebseinheit für einen Antriebsstrang eines elektrisch antreibbaren Kraftfahrzeugs, insbesondere eines Hybridkraftfahrzeuges, mit einer ersten elektrischen Maschine sowie einer zweiten elektrischen Maschine und einer Ausgangswelle, die auch als Getriebeeingangswelle bezeichnet wird. Ein Rotor der zweiten elektrischen Maschine ist drehfest mit der Ausgangswelle verbunden. Weiterhin umfasst die Antriebseinheit eine Trennkupplung, mit der ein Rotor der ersten elektrischen Maschine und damit eine an einer mit dem Rotor der ersten elektrischen Maschine drehfest verbundenen erste Welle angeschlossene Verbrennungskraftmaschine zur Drehmomentübertragung mit der Ausgangswelle verbindbar oder verbunden ist. Die Antriebseinheit weist weiterhin ein erstes Strömungssystem zur Realisierung einer Strömung einer ersten Flüssigkeit zur zumindest anteiligen Kühlung wenigstens einer elektrischen Maschine sowie ein zweites Strömungssystem zur Realisierung einer Strömung einer zweiten Flüssigkeit auf, wobei das erste Strömungssystem und das zweite Strömungssystem derart angeordnet und ausgestaltet sind, dass Wärme von der ersten Flüssigkeit im ersten Strömungssystem auf die zweite Flüssigkeit im zweiten Strömungssystem übertragbar ist.

Vorzugsweise wird die erste Flüssigkeit auch zur Schmierung von beweglich angeordneten Komponenten, insbesondere der elektrischen Maschine oder auch eines Zahnrad-Getriebes, verwendet. In entsprechender Weise ist auch das erste Strömungssystem ausgestattet, um die erste Flüssigkeit den zu schmierenden bzw. zu kühlenden Komponenten zuzuführen. Dabei wird durch das erste Strömungssystem die Strömung der ersten Flüssigkeit vorzugsweise durch die Antriebseinheit realisiert. Es ist dabei insbesondere vorgesehen, dass die beiden elektrischen Maschinen in Reihe angeordnet sind. In einer bevorzugten Ausgestaltung ist vorgesehen, dass die Rotoren der beiden elektrischen Maschinen bzw. deren Rotationsachsen koaxial angeordnet sind. Die Trennkupplung ist eine schaltbare Kupplung, die von einem offenen Zustand in einen geschlossenen Zustand und umgekehrt geschaltet werden kann. Die Trennkupplung befindet sich im DrehmomentÜbertragungspfad zwischen den beiden elektrischen Maschinen.

Die Antriebseinheit kann dabei derart ausgestaltet sein, dass die mit dem Rotor der ersten elektrischen Maschine fest verbundene erste Welle radial innerhalb der mit dem Rotor der zweiten elektrischen Maschine fest verbundenen Ausgangswelle angeordnet ist.

Die erste Welle kann dabei geteilt ausgeführt sein, nämlich in Form einer zentral verlaufenden Hohlwelle, auf der bereichsweise eine drehfest verbundene Nabe angeordnet ist, die wiederum drehfest mit dem Rotor der ersten elektrischen Maschine verbunden ist.

Die radiale Innenseite der Trennkupplung kann dabei drehfest mit der Nabe an der ersten elektrischen Maschine verbunden sein, und die radiale Außenseite der Trennkupplung kann mit der Ausgangswelle, die drehfest mit dem Rotor der zweiten elektrischen Maschine verbunden ist, verbunden sein.

Des Weiteren kann die Antriebseinheit ein Getriebe aufweisen, welches mit der auch als Getriebeeingangswelle bezeichneten Ausgangswelle der Antriebseinheit in Wirkverbindung steht, so dass ein von der Ausgangswelle zur Verfügung gestelltes Drehmoment bzw. die von der Ausgangswelle realisierte Drehbewegung über das Getriebe über- oder untersetzt an eine weitere Getriebeeinheit eines Kraftfahrzeugs geleitet werden kann, oder auch direkt auf Antriebsräder eines Kraftfahrzeuges geleitet werden kann. Dieses Getriebe kann ein Differenzial-Getriebe umfassen oder als ein solches ausgestaltet sein. Das Getriebe kann dabei ein erstes Zahnrad umfassen, was mit einer Außenverzahnung an der Ausgangswelle kämmt. Durch das erste Zahnrad wird somit eine Übersetzungsstufe in der Antriebseinheit realisiert. Dieses erste Zahnrad kann dabei drehfest mit einer Vorlegewelle des Getriebes gekoppelt sein, deren Außenverzahnung wiederum mit einem Eingangs-Zahnrad eines Differenzial-Getriebes kämmt, wodurch eine dritte Übersetzungsstufe realisiert wird

Insbesondere ist vorgesehen, dass die Antriebseinheit einen Wärmeübertrager zur Übertragung von Wärme von der ersten Flüssigkeit auf die zweite Flüssigkeit aufweist. In entsprechender Weise sind das erste Strömungssystem und das zweite Strömungssystem an einen Wärmeübertrager bzw. einen Wärmetauscher angeschlossen, in dem die Wärmeübertragung von der ersten Flüssigkeit auf die zweite Flüssigkeit vorgenommen wird. Der Wärmeübertrager bzw. Wärmetauscher wird dabei von den Flüssigkeiten der beiden Strömungssysteme durchströmt, sodass Wärme von der ersten Flüssigkeit auf die zweite Flüssigkeit übertragen werden kann.

Das erste Strömungssystem ist erfindungsgemäß derart ausgestaltet, dass damit die erste Flüssigkeit auch der Trennkupplung zwecks deren Kühlung und/oder Schmierung zuführbar ist. Diese Ausführungsform ermöglicht es auch, dass vom ersten Strömungssystem transportierte erste Flüssigkeit der Trennkupplung lediglich zwecks deren Kühlung bzw. Schmierung zugeführt wird. Auf einen entsprechenden hydraulisch betätigbaren Aktor zur Betätigung der Trennkupplung kann in dieser Ausführung entsprechend verzichtet werden.

Ebenfalls kann das erste Strömungssystem die erste Flüssigkeit auch Lagern, Reibelementen bzw. Übersetzungsstufen von Teilgetrieben zwecks Kühlung bzw. Schmierung zuführen.

Insbesondere ist vorgesehen, dass ein jeweiliges Strömungssystem als ein Strömungskreislauf realisiert ist, wobei als erste Flüssigkeit vorzugsweise Öl verwendet wird und als zweite Flüssigkeit Wasser.

Der zweite Strömungskreislauf kann somit ein in dem Gehäuse der zu kühlenden elektrischen Maschine integrierter Wasserkreislauf sein, zum Kühlen vom Öl im ersten Strömungskreislauf mittels eines Wärmetauschers.

Alternativ oder hinzukommend kann das erste Strömungssystem und die Trennkupplung derart angeordnet und ausgestaltet sein, dass vom ersten Strömungssystem die erste Flüssigkeit der Trennkupplung zwecks deren hydraulischer Betätigung zuführbar ist. Diese alternative Ausführungsform schließt aber nicht aus, dass auch die Trennkupplung von Flüssigkeit im ersten Strömungssystem gekühlt wird.

Weiterhin kann die erfindungsgemäße Antriebseinheit eine Volumenstromquelle, insbesondere eine Pumpe, einen hydraulischen Kupplungsaktor als Betätigungssystem zur Betätigung der Trennkupplung und eine Schalteinrichtung aufweisen, mit der sequenziell der von der Volumenstromquelle zur Verfügung gestellte Flüssigkeits-Volumenstrom der elektrischen Maschine bzw. dem Kupplungsaktor zuführbar ist. Somit kann eine sequenzielle Betätigung der Trennkupplung sowie der Kühlung bzw. Schmierung der elektrischen Maschine erfolgen. Diese Schalteinrichtung kann insbesondere ein 3/2-Wegeventil sein. Die Antriebseinheit kann eine Hydrauliksteuereinheit aufweisen, zur bedarfsgerechten Steuerung der als Hydraulikpumpe ausgestalteten Volumenstromquelle und/ oder der Schalteinrichtung.

Zur Versorgung der Trennkupplung mit dem Flüssigkeits-Volumenstrom dient dann eine druckbeaufschlagte Leitung.

In alternativer Ausgestaltung ist vorgesehen, dass die Trennkupplung elektromechanisch betätigbar ausgeführt ist. Dafür ist ein entsprechender elektromechanischer Aktor vorgesehen. Der erzeugte Flüssigkeits-Volumenstrom kann dann ausschließlich zur Kühlung genutzt werden.

Erfindungsgemäß ist vorgesehen, dass das erste Strömungssystem je wenigstens einer elektrischen Maschine eine Verzweigung in einen ersten Kühlpfad und in einen zweiten Kühlpfad aufweist, sodass die elektrische Maschine in einem von ihrem Rotor ausgebildeten radialen Innenraum sowie auch an ihrer radialen Außenseite kühlbar ist. Des Weiteren kann die Antriebseinheit einen Ölfilter aufweisen, der bevorzugt im Getriebesumpf angeordnet ist.

Die hydraulischen Komponenten der Antriebseinheit können eine Hydraulikeinheit ausbilden, die vorzugsweise direkt mechanisch mit dem Gehäuse der zu kühlenden elektrischen Maschine verbunden ist bzw. in dieses integriert ist.

Insbesondere kann dabei der Wärmeübertrager ein Bestandteil des Gehäuses der elektrischen Maschine sein bzw. unmittelbar mechanisch mit dem Gehäuse verbunden sein.

Ein weiterer Aspekt der vorliegenden Erfindung ist eine Antriebsanordnung mit einer erfindungsgemäßen Antriebseinheit sowie mit einer Verbrennungskraftmaschine, die insbesondere mittelbar drehfest mit dem Rotor der ersten elektrischen Maschine gekoppelt oder koppelbar ist. Dabei ist die Verbrennungskraftmaschine über die erste Welle angeschlossen oder über eine weitere Kupplungseinrichtung mit der ersten Welle verbunden, ggf. unter Zwischenschaltung eines Schwingungsdämpfers.

Weiterhin kann die erfindungsgemäße Antriebsanordnung ein Getriebe oder ein Eingangselement eines Radantriebs umfassen, wobei die Verbrennungskraftmaschine über die Antriebseinheit mit dem Getriebe bzw. dem Eingangselement des Radantriebs mechanisch über die Trennkupplung der Antriebseinheit verbindbar oder verbunden ist. In günstiger Ausgestaltung umfasst die Antriebsanordnung wenigstens eine Radantriebswelle, die über das Getriebe mit der Ausgangswelle der Antriebseinheit verbunden ist, sodass eine von der Ausgangswelle realisierte Drehbewegung durch das Getriebe auf die Radantriebswelle übertragen werden kann.

Zudem kann die erfindungsgemäße Antriebsanordnung zwischen der Verbrennungskraftmaschine und einer ersten Welle, die mit dem Rotor der ersten elektrischen Maschine drehfest verbunden ist, eine erste Übersetzungsstufe zwecks Übersetzung der Drehzahl der von der Verbrennungskraftmaschine realisierten Drehbewegung auf die erste Welle aufweisen.

Das Abtriebselement der Verbrennungskraftmaschine kann dabei eine Dämpfereinheit sein, oder auch eine Kupplung zum Öffnen und Schließen des Drehmoment-Übertragungspfades zwischen der Verbrennungskraftmaschine und der Antriebseinheit oder auch eine Kombination aus einer Dämpfereinheit und einer Kupplung. Weiterhin kann das Abtriebselement als einen Bestandteil ein innenverzahntes Zahnrad aufweisen, welches mit einer Außenverzahnung der ersten Welle kämmt und somit die erste Übersetzungsstufe realisiert.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Figur 1: eine erfindungsgemäße Antriebsanordnung in Schnittansicht,
Figur 2: eine Seitenansicht der Antriebsanordnung,
Figur 3: eine Schnittansicht eines Teilbereichs der Antriebsanordnung von oben,
Figur 4: eine Schnittansicht eines Teilbereichs der Antriebsanordnung von der Seite, und
Figur 5: eine vergrößerte Darstellung eines Bereichs der in Figur 4 dargestellten Schnittansicht.

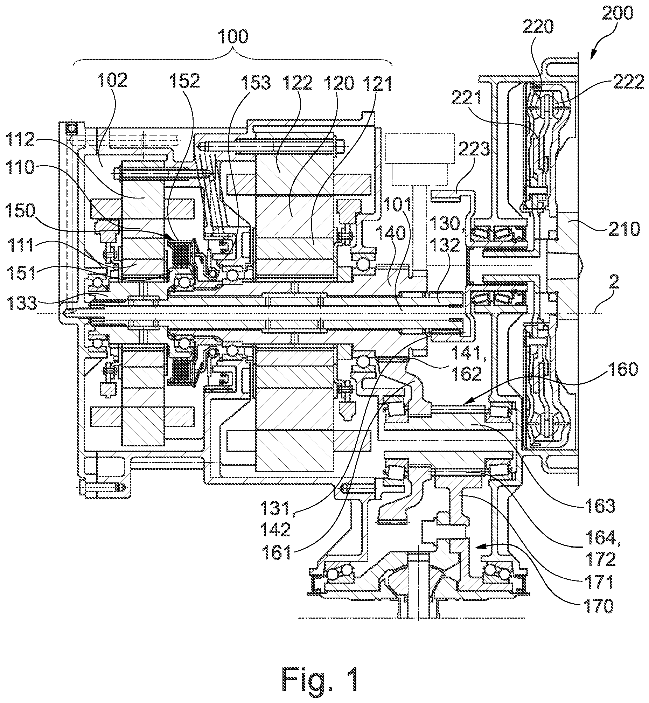

In Figur 1 ist eine Antriebseinheit 100 für einen Antriebsstrang eines elektrisch antreibbaren Kraftfahrzeugs, insbesondere eines Hybridkraftfahrzeuges, dargestellt, die eine erste elektrischen Maschine 110 sowie eine zweite elektrischen Maschine 120 aufweist, die beide auf einer gemeinsamen Rotationsachse 101 angeordnet sind. Der Rotor 111 der ersten elektrischen Maschine 110 ist dabei koaxial zur Rotationsachse 101 sowie auch zum Rotor 121 der zweiten elektrischen Maschine 120 angeordnet. Der Stator 112 der ersten elektrischen Maschine 110 sowie auch der Stator 122 der zweiten elektrischen Maschine 120 ist von einem Gehäuse 102 der Antriebseinheit 100 aufgenommen.

Der Rotor 111 der ersten elektrischen Maschine ist drehfest mit einer ersten Welle 130 verbunden. Der Rotor 121 der zweiten elektrischen Maschine 120 ist drehfest mit einer Ausgangswelle 140 verbunden, die auch als Getriebeeingangswelle bezeichnet werden kann.

Weiterhin umfasst die Antriebseinheit 100 eine Trennkupplung 150, mit der die erste elektrische Maschine 110 und damit eine an der mit dem Rotor 111 der ersten elektrischen Maschine 110 drehfest verbundenen erste Welle 130 angeschlossene Verbrennungskraftmaschine zur Drehmomentübertragung mit der Ausgangswelle verbindbar oder verbunden ist.

In der hier dargestellten Ausführungsform ist die erste Welle 130 zweiteilig ausgeführt, nämlich aus einer zentral verlaufenden Hohlwelle 132 sowie einer auf dieser Hohlwelle 132 positionierten und mit dieser drehfest verbundenen Nabe 133, wobei die Nabe 133 wiederum fest mit dem Rotor 111 der ersten elektrischen Maschine 110 verbunden ist.

Die Nabe 133 bildet die radiale Innenseite 151 der Trennkupplung 150 aus, bzw. ist mit dieser Eingangsseite der Trennkupplung 150 fest verbunden.

Die radiale Außenseite 152 der Trennkupplung 150, die die Ausgangsseite der Trennkupplung 150 realisiert, ist drehfest mit der Ausgangswelle 140 verbunden.

Die Trennkupplung 150 ist eine schaltbare Kupplung, die von einem offenen Zustand in einen geschlossenen Zustand und umgekehrt geschaltet werden kann. Zu diesem Zweck ist der Trennkupplung 150 ein Betätigungssystem 153 zugeordnet.

Derart kann bei Schließung der Trennkupplung 150 ein Drehmoment von der ersten Welle 130 auf die Ausgangswelle 140 oder auch umgekehrt übertragen werden.

In der hier dargestellten Ausführungsform ist somit vorgesehen, dass die beiden elektrischen Maschinen 110,120 in Reihe angeordnet sind, wobei die Rotoren 111,121 der beiden elektrischen Maschinen 110,120 bzw. deren Rotationsachsen koaxial angeordnet sind.

Dabei verläuft die erste Welle 130 bzw. deren zentral verlaufende Hohlwelle 132 radial innerhalb der Ausgangswelle 140, wodurch insgesamt das benötigte Bauvolumen der Antriebseinheit 100 gering gehalten werden kann.

Des Weiteren umfasst die hier dargestellte Antriebseinheit 100 ein Getriebe 160, welches mit der auch als Getriebeeingangswelle bezeichneten Ausgangswelle 140 der Antriebseinheit 100 in Wirkverbindung steht, so dass ein von der Ausgangswelle 140 zur Verfügung gestelltes Drehmoment bzw. die von der Ausgangswelle 140 realisierte Drehbewegung über das Getriebe 160 über- oder untersetzt an eine weitere Getriebeeinheit eines Kraftfahrzeugs geleitet werden kann, oder auch direkt auf Antriebsräder eines Kraftfahrzeuges geleitet werden kann.

Dieses Getriebe 160 umfasst in der hier dargestellten Ausführungsform ein Differenzial-Getriebe 170.

Des Weiteren umfasst das Getriebe 160 ein erstes Zahnrad 161, was mit einer Außenverzahnung 141 an der Ausgangswelle 140 kämmt. Durch das erste Zahnrad 161 wird somit eine zweite Übersetzungsstufe 162 in der Antriebseinheit 100 realisiert. Dieses erste Zahnrad 161 ist dabei drehfest mit einer Vorlegewelle 163 des Getriebes 160 gekoppelt, deren Außenverzahnung 164 wiederum mit einem Eingangs-Zahnrad 171 des Differenzial-Getriebes 170 kämmt, wodurch eine dritte Übersetzungsstufe 172 realisiert wird.

Die Antriebseinheit 100 ist dabei Bestandteil einer ebenfalls dargestellten Ausführungsform einer erfindungsgemäßen Antriebsanordnung 200.

Diese Antriebsanordnung 200 weist zusätzlich eine hier nicht dargestellte Verbrennungskraftmaschine auf, die im an den gezeigten Anschluss 210 angeschlossen Zustand, über die erste Welle 130 drehfest mit dem Rotor 111 der ersten elektrischen Maschine 110 gekoppelt oder - bei Zwischenschaltung einer weiteren Kupplung - koppelbar ist.

Die dargestellte Antriebsanordnung 200 ist derart ausgestaltet, dass zwischen dem Anschluss 210 für eine hier nicht dargestellte Verbrennungskraftmaschine und der ersten Welle 130, die mit dem Rotor 111 der ersten elektrischen Maschine 110 drehfest verbunden ist, eine erste Übersetzungsstufe 142 ausgebildet ist zwecks Übersetzung der Drehzahl der von der Verbrennungskraftmaschine bzw. deren Anschlusses 210 realisierten Drehbewegung auf die erste Welle 130.

Zu diesem Zweck ist ein Abtriebselement 220 der Verbrennungskraftmaschine vorgesehen, welches eine Dämpfereinheit 221 aufweisen kann oder auch eine Kupplung 222 zum Öffnen und Schließen des Drehmoment-Übertragungspfades zwischen der Verbrennungskraftmaschine und der Antriebseinheit 100, oder auch eine gezeigte Kombination aus einer Dämpfereinheit 221 und einer Kupplung 222.

Weiterhin umfasst das Abtriebselement 220 als einen Bestandteil ein innenverzahntes Zahnrad 223, welches mit einer Außenverzahnung 131 der ersten Welle 130 kämmt und somit eine erste Übersetzungsstufe 142 realisiert.

Es ist ersichtlich, dass in dem hier dargestellten Ausführungsbeispiel eine Drehachse des Abtriebselements 220 lateral versetzt ist zur Rotationsachse 101 der Antriebseinheit 100.

Derart kann eine von der hier nicht dargestellten Verbrennungskraftmaschine erzeugte Drehbewegung über das Abtriebselement 220 und die erste Übersetzungsstufe 142 auf die erste Welle 130 geleitet werden, sodass der darauf befindliche Rotor 111 der ersten elektrischen Maschine 110 in Drehbewegung versetzt werden kann, um als Generator betrieben zu werden.

Bei Schließung der Trennkupplung 150 kann die anliegende Drehbewegung von der ersten Welle 130, gegebenenfalls verstärkt von einem elektromotorischen Antrieb durch die erste elektrische Maschine 110, auf die Ausgangswelle 140 übertragen werden. Aufgrund der drehfesten Verbindung des Rotors 122 der zweiten elektrischen Maschine 120 mit der Ausgangswelle 140 kann ebenfalls ein von der zweiten elektrischen Maschine 120 zur Verfügung gestelltes Drehmoment zusätzlich auf die Ausgangswelle 140 aufgebracht werden.

Alternativ kann bei Öffnung der Trennkupplung 150 auch nur die zweite elektrische Maschine 120 alleine betrieben werden, um die Ausgangswelle 140 zu drehen.

Die Drehbewegung der Ausgangswelle 140 wird über deren Außenverzahnung 141 auf das erste Zahnrad 161 des angeschlossenen Getriebes 160 geleitet, wobei die zweite Übersetzungsstufe 162 realisiert wird.

Vom ersten Zahnrad 161 wird das Drehmoment bzw. die Drehbewegung auf die Vorlegewelle 163 geleitet, von der es über das Eingangs-Zahnrad 171 des Differenzial-Getriebes 170 diesem zugeleitet wird.

Vom Differenzial-Getriebe 170 wird das Drehmoment hier nicht dargestellten Radantriebs-Wellen zugeleitet, oder auch bei Bedarf einem weiteren Getriebe zur Über- bzw. Untersetzung des Drehmoments bzw. der Drehzahl.

Mit der dargestellten Antriebsanordnung 200 lassen sich unterschiedlichste Fahrzustände realisieren, wie zum Beispiel der Betrieb der Verbrennungskraftmaschine alleine zum Antrieb eines Kraftfahrzeugs, oder auch unter Hinzuschaltung der zweiten elektrischen Maschine und/oder der ersten elektrischen Maschine, sowie ein gleichzeitiger Generatorbetrieb der ersten elektrischen Maschine beim Betrieb der Verbrennungskraftmaschine und/oder der zweiten elektrischen Maschine, sowie ein alleiniger Betrieb der zweiten elektrischen Maschine, oder auch ein Rekuperationsbetrieb der ersten elektrischen Maschine und/oder der zweiten elektrischen Maschine.

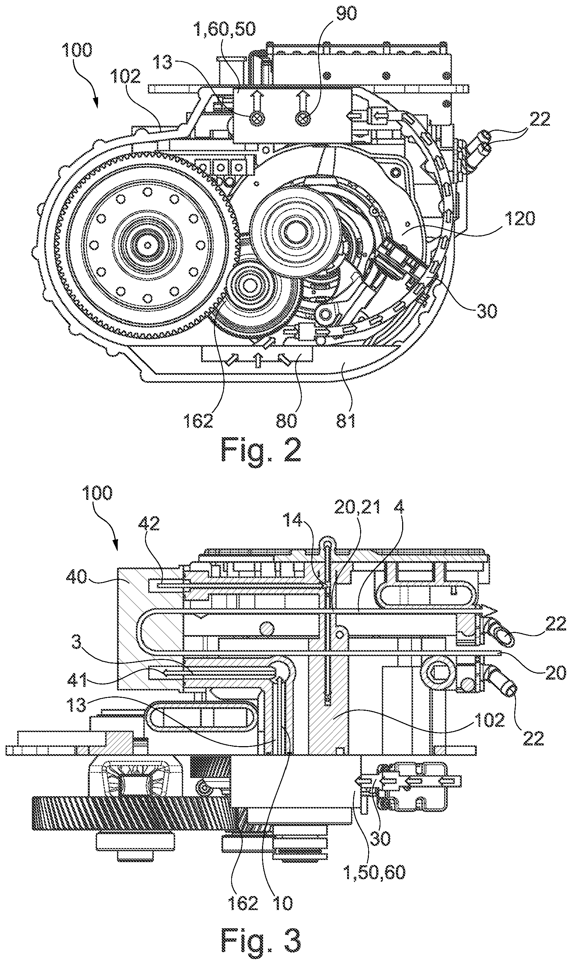

Eine erfindungsgemäß eingesetzte Hydraulikeinheit 1 sowie die daran angeschlossenen Strömungssysteme 10,20 und ihre Bestandteile sind im Wesentlichen in den Figuren 2-5 dargestellt.

Figur 2 zeigt in einer Ansicht von der Seite eine Hydraulikeinheit 1 als kompakte Einheit, in der eine nicht im Detail dargestellte Volumenstromquelle 50, insbesondere eine Pumpe, sowie eine ebenfalls nicht im Detail dargestellte Hydrauliksteuereinheit 60 angeordnet sind. Die Hydraulikeinheit 1 ist in einem gemeinsamen Gehäuse 102 untergebracht, welches gleichzeitig auch ein Gehäuse der zweiten elektrischen Maschine 120 ist.

Die Hydraulikeinheit 1 umfasst einen Anschluss für eine Kühlleitung 13, mit der KühlFlüssigkeit zum zu kühlenden Aggregat leitbar ist, sowie einen Anschluss für eine Betätigungsleitung 90, mit der eine Flüssigkeit zur Betätigung der Trennkupplung zuleitbar ist.

Des Weiteren sind in Figur 2 zwei Kühlwasser-Anschlüsse 22 ersichtlich, zur Zuführung einer Flüssigkeit für das zweite Strömungssystem.

Im unteren Bereich ist ein Ölfilter 80 ersichtlich, der sich in einem Ölsumpf 81 befindet, welcher eine Speichereinrichtung für die zu verwendende Flüssigkeit darstellt. Aus diesem Sumpf 81 führt eine Zwischenleitung 30 zur Hydraulikeinheit 1, um diese mit Flüssigkeit zu versorgen.

Die Hydraulikeinheit 1 bzw. die darin integrierte Volumenstromquelle 50 bzw. Pumpe saugt Flüssigkeit durch den Ölfilter 80 an. Die Volumenstromquelle 50 stellt dann durch die hier nicht extra dargestellte Hydrauliksteuereinheit den Volumenstrom der Flüssigkeit ein, gemäß der Anforderung der Kühlung einer elektrischen Maschine und/oder von Lagern, Zahnrädern sowie dem benötigten Betätigungsdruck für die Aktivierung der Trennkupplung.

Durch die Anordnung der Hydraulikeinheit im oberen Bereich der Antriebsanordnung ist in optimaler Weise eine Bauraum-Ausnutzung innerhalb des Gehäuses 102 gegeben.

Figur 3 zeigt in einer Schnittansicht von oben ebenfalls einen Bereich der erfindungsgemäßen Antriebsanordnung, wobei hier deutlich die zweite Übersetzungsstufe 162 ersichtlich ist.

Auch hier ist das Hydrauliksystem 1 dargestellt, an dem die Kühlleitung 13 als Bestandteil des ersten Strömungssystems 10 angeschlossen ist. Durch die Kühlleitung 13 kann in der hier dargestellten Ausführungsform als Flüssigkeit Öl 3 transportiert werden.

Der Volumenstrom dieser Flüssigkeit gelangt in einen als Wärmetauscher ausgestalteten Wärmeübertrager 40, wo die Flüssigkeit in einen Einlass 41 strömt, nachdem sie Wärme von einer elektrischen Maschine aufgenommen hat. Die Flüssigkeit durchströmt den Wärmeübertrager 40 und tritt aus einem Auslass 42 abgekühlt wieder aus, da sie im Wärmeübertrager 40 Wärme auf die Flüssigkeit im zweiten Strömungssystem 20, hier Wasser 4, übertragen hat. Das zweite Strömungssystem 20 dient somit als Kühlwasserkreislauf. Die Flüssigkeit im zweiten Strömungssystem 20 fließt in einer Kühlwasser-Leitung 21. Sie wird dem Hydrauliksystem 1 über Kühlwasser-Anschlüsse 22 zur Verfügung gestellt und abgeleitet.

Durch die Wärmeübertragung von einer elektrischen Maschine auf die Flüssigkeit kann die jeweilige elektrische Maschine in einem optimalen Temperaturbereich und demzufolge mit einem relativ hohen Wirkungsgrad betrieben werden.

Die Flüssigkeit des ersten Strömungssystems 10 gelangt nach dem Auslass 42 zu einer Verteilerleitung 14, die die Verteilung der Flüssigkeit im Gehäuse 102 ermöglicht.

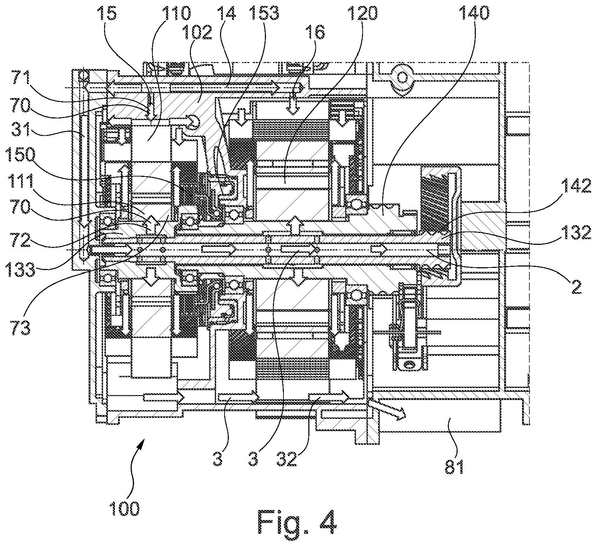

Figur 4 sind in einer Schnittansicht Strömungspfade des Kühlmediums entnehmbar. Hier sind die wichtigsten Aggregate der Antriebsanordnung auf einer gemeinsamen Rotationsachse 2 dargestellt. Es ist ersichtlich, dass der Strom der Flüssigkeit für die Kühlung an mehreren Verzweigungen 70 geteilt wird, um mehreren elektrischen Maschinen 110,120 zugeführt zu werden, sowie zumindest bei der ersten elektrischen Maschine 110 deren Innenseite und Außenseite kühlen zu können. Es ergibt sich dadurch ein erster Pfad 71 für das Kühlmedium, sowie ein zweiter Pfad 72. Insbesondere über den zweiten Pfad 72 kann das Kühlmedium über die Nabe 133, auf der der Rotor 111 der ersten elektrischen Maschine 110 sitzt, in einen Innenraum 73 der ersten elektrischen Maschine 110 gelangen, der durch den Rotor oder auch durch den Stator der ersten elektrischen Maschine 110 ausgebildet ist.

Durch eine weitere Verzweigung 70 lässt sich eine Kühlung 15 des Stators der ersten elektrischen Maschine 110 realisieren, und durch eine Kühlung 16 eine Kühlung des Status der zweiten elektrischen Maschine 120 realisieren.

Zur Führung des Kühlmediums von einer radialen Außenseite der beiden elektrischen Maschinen 110,120 zur radialen Innenseite ist eine in der hier dargestellten Ausführungsform axial außen vorgesehene Zwischenleitung 30 angeordnet, welche einen Bestandteil des Leitungssystems zwischen Ölfilter und Hydraulikeinheit ausbildet. An der radialen Innenseite sorgt die drehbewegungsbedingte Fliehkraft dafür, dass sich die Kühlflüssigkeit verteilt.

Wenn das Kühlmedium eine elektrische Maschine derart umströmt hat, dass es sich wieder auf der radialen Außenseite der elektrischen Maschine befindet, kann es durch einen Rückfluss 32 wieder dem Ölsumpf 81 geführt werden.

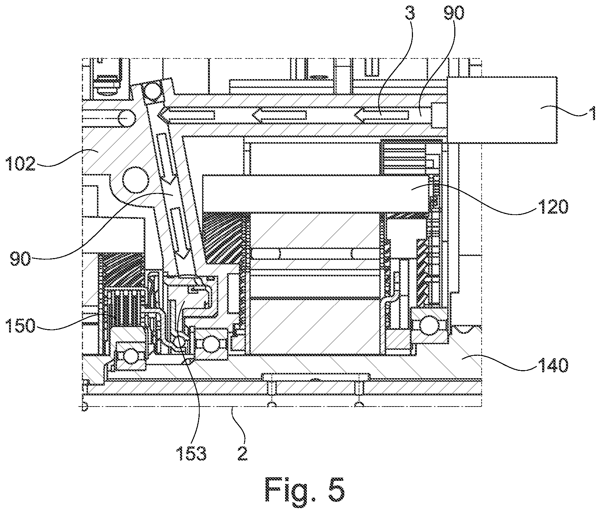

Neben der Kühlung einzelner Aggregate kann das erfindungsgemäße Hydrauliksystem auch dazu ausgestaltet sein, die Trennkupplung 150 zu betätigen. Das dafür benötigte Strömungssystem ist in Figur 5 dargestellt.

In dem Gehäuse 102 ist die Betätigungsleitung 90 integriert, welche zur Führung von Öl 3 als Druckmedium dient. Dieses Druckmedium wird dem Betätigungssystem 153, welches als ein hydraulischer Aktor ausgestaltet ist, zugeführt. Bei Anliegen eines entsprechenden Drucks veranlasst das Betätigungssystem 153 eine Schließung oder eine Öffnung der Trennkupplung 150.

Mit der hier vorgeschlagenen Antriebseinheit und der damit ausgestatteten Antriebsanordnung werden Einrichtungen für elektrisch antreibbare Kraftfahrzeuge zur Verfügung gestellt, deren einzelne Komponenten optimal kühlbar sind, sodass sie mit einer langen Lebensdauer bzw. mit einem optimalen Wirkungsgrad betrieben werden können.

### Bezugszeichenliste

- 1: Hydraulikeinheit
- 2: Rotationsachse
- 3: Öl
- 4: Wasser
- 10: erstes Strömungssystem
- 13: Kühlleitung
- 14: Verteilerleitung
- 15: Kühlung des Stators der ersten elektrischen Maschine
- 16: Kühlung des Stators der zweiten elektrischen Maschine
- 20: zweites Strömungssystem
- 21: Kühlwasser-Leitung
- 22: Kühlwasser-Anschluss
- 30: Zwischenleitung
- 31: äußere Leitung
- 32: Rückfluss in Ölsumpf
- 40: Wärmeübertrager
- 41: Einlass für erwärmte Flüssigkeit
- 42: Auslass für abgekühlte Flüssigkeit
- 50: Volumenstromquelle
- 60: Hydrauliksteuereinheit
- 70: Verzweigung
- 71: Erster Kühlpfad
- 72: Zweiter Kühlpfad
- 73: Innenraum
- 80: Ölfilter
- 81: Ölsumpf
- 90: Betätigungsleitung
- 100: Antriebseinheit
- 101: Rotationsachse
- 102: Gehäuse
- 110: erste elektrische Maschine
- 111: Rotor der ersten elektrischen Maschine
- 112: Stator der ersten elektrischen Maschine
- 120: zweite elektrische Maschine
- 121: Rotor der zweiten elektrischen Maschine
- 122: Stator der zweiten elektrischen Maschine
- 130: erste Welle
- 131: Außenverzahnung der ersten Welle
- 132: zentral verlaufende Hohlwelle
- 133: Nabe
- 140: Ausgangswelle
- 141: Außenverzahnung der Ausgangswelle
- 142: erste Übersetzungsstufe
- 150: Trennkupplung
- 151: radiale Innenseite der Trennkupplung
- 152: radiale Außenseite der Trennkupplung
- 153: Betätigungssystem
- 160: Getriebe
- 161: erstes Zahnrad
- 162: zweite Übersetzungsstufe
- 163: Vorlegewelle
- 164: Außenverzahnung der Vorlegewelle
- 170: Differenzial-Getriebe
- 171: Eingangs-Zahnrad
- 172: dritte Übersetzungsstufe
- 200: Antriebsanordnung
- 210: Anschluss für eine Verbrennungskraftmaschine
- 220: Abtriebselement
- 221: Dämpfereinheit
- 222: Kupplung
- 223: innenverzahntes Zahnrad

## Patentansprüche

1. Antriebseinheit (100) für einen Antriebsstrang eines elektrisch antreibbaren Kraftfahrzeugs, insbesondere eines Hybridkraftfahrzeuges, mit einer ersten elektrischen Maschine (110) sowie einer zweiten elektrischen Maschine (120) und einer Ausgangswelle (140), wobei ein Rotor (121) der zweiten elektrischen Maschine (120) drehfest mit der Ausgangswelle (140) verbunden ist und wobei die Antriebseinheit (100) weiterhin eine Trennkupplung (150) aufweist, mit der ein Rotor (111) der ersten elektrischen Maschine (110) zur Drehmomentübertragung mit der Ausgangswelle (140) verbindbar ist, wobei die Antriebseinheit (100) weiterhin ein erstes Strömungssystem (10) zur Realisierung einer Strömung einer ersten Flüssigkeit zur zumindest anteiligen Kühlung wenigstens einer der elektrischen Maschinen (110 120) aufweist, welches derart ausgestaltet ist, dass damit die erste Flüssigkeit auch der Trennkupplung (150) zwecks deren Kühlung und/oder Schmierung zuführbar ist, **dadurch gekennzeichnet, dass** das erste Strömungssystem (10) je wenigstens einer elektrischen Maschine (110,120) eine Verzweigung (70) in einen ersten Kühlpfad (71) und in einen zweiten Kühlpfad (72) aufweist, sodass die elektrische Maschine (110,120) in einem von ihrem Rotor (111,121) ausgebildeten radialen Innenraum (73) sowie auch an ihrer radialen Außenseite kühlbar ist, und dass die Antreibseinheit (100) weiterhin ein zweites Strömungssystem (20) zur Realisierung einer Strömung einer zweiten Flüssigkeit aufweist, wobei das erste Strömungssystem (10) und das zweite Strömungssystem (20) derart angeordnet und ausgestaltet sind, dass Wärme von der ersten Flüssigkeit im ersten Strömungssystem (10) auf die zweite Flüssigkeit im zweiten Strömungssystem (20) übertragbar ist.

2. Antriebseinheit nach Anspruch 1, **dadurch gekennzeichnet, dass** die Antriebseinheit (100) einen Wärmeübertrager (40) zur Übertragung von Wärme von der ersten Flüssigkeit auf die zweite Flüssigkeit aufweist.

3. Antriebseinheit nach wenigstens einem der vorhergehenden Ansprüche, **dadurch gekennzeichnet, dass** das erste Strömungssystem (10) und die Trennkupplung (150) derart angeordnet und ausgestaltet sind, dass vom ersten Strömungssystem (10) die erste Flüssigkeit der Trennkupplung (150) zwecks deren hydraulischer Betätigung zuführbar ist.

4. Antriebseinheit nach Anspruch 3, **dadurch gekennzeichnet, dass** diese eine Volumenstromquelle (50), insbesondere eine Pumpe, einen hydraulischen Kupplungsaktor als Betätigungssystem (153) zur Betätigung der Trennkupplung (150) und eine Schalteinrichtung aufweist, mit der sequenziell der von der Volumenstromquelle (50) zur Verfügung gestellte Flüssigkeits-Volumenstrom der elektrischen Maschine (110,120) bzw. dem Kupplungsaktor zuführbar ist.

5. Antriebseinheit nach einem der Ansprüche 1 oder 2, **dadurch gekennzeichnet, dass** die Trennkupplung (150) elektromechanisch betätigbar ausgeführt ist.

6. Antriebsanordnung mit einer Antriebseinheit gemäß einem der Ansprüche 1 bis 5 sowie mit einer Verbrennungskraftmaschine, die drehfest mit dem Rotor (111) der ersten elektrischen Maschine (110) gekoppelt oder koppelbar ist.

7. Antriebsanordnung nach Anspruch 6, umfassend ein Getriebe (160) oder ein Eingangselement eines Radantriebs, wobei die Verbrennungskraftmaschine über die Antriebseinheit (100) mit dem Getriebe (160) bzw. dem Eingangselement des Radantriebs mechanisch über die Trennkupplung (150) der Antriebseinheit (100) verbindbar oder verbunden ist.

8. Antriebsanordnung nach einem der Ansprüche 6 und 7, umfassend zwischen der Verbrennungskraftmaschine und einer ersten Welle (130), die mit dem Rotor (111) der ersten elektrischen Maschine (110) drehfest verbunden ist, eine erste Übersetzungsstufe (142) zwecks Übersetzung der Drehzahl der von der Verbrennungskraftmaschine realisierten Drehbewegung auf die erste Welle (130).

## Claims

1. A drive unit (100) for a drive train of an electrically drivable motor vehicle, in particular a hybrid motor vehicle, comprising a first electric machine (110), a second electric machine (120) and an output shaft (140), wherein a rotor (121) of the second electric machine (120) is connected to the output shaft (140) for conjoint rotation and the drive unit (100) additionally has an separating clutch (150) with which a rotor (111) of the first electric machine (110) can be connected to the output shaft (140) for transmitting torque, wherein the drive unit (100) additionally has a first flow system (10) for implementing a flow of a first fluid for at least partially cooling at least one of the electric machines (110, 120), said flow system being designed in such a way that the first fluid can also be supplied to the separating clutch (150) for cooling and/or lubricating the latter, **characterized in that** the first flow system (10) of at least either one of the electric machines (110, 120) has a branching (70) into a first cooling path (71) and a second cooling path (72), so that the electric machine (110, 120) can be cooled in a radial inner chamber (73) formed by its rotor (111, 121) as well as on its radial outer side, and **in that** the drive unit (100) additionally has a second flow system (20) for implementing a flow of a second fluid, the first flow system (10) and the second flow system (20) being arranged and designed in such a way that heat can be transferred from the first fluid in the first flow system (10) to the second fluid in the second flow system (20).

2. The drive unit according to Claim 1, **characterized in that** the drive unit (100) has a heat exchanger (40) for transferring heat from the first fluid to the second fluid.

3. The drive unit according to at least one of the previous claims, **characterized in that** the first flow system (10) and the separating clutch (150) are arranged and designed in such a way that the first fluid can be supplied by the first flow system (10) to the separating clutch (150) for its hydraulic actuation.

4. The drive unit according to Claim 3, **characterized in that** the unit comprises a volume flow source (50), in particular a pump, a hydraulic clutch actuator as an actuation system (153) for actuating the separating clutch (150), and a switching device with which the fluid volume flow provided by the volume flow source (50) can be supplied sequentially to the electric machine (110, 120) or the clutch actuator.

5. The drive unit according to either of Claims 1 or 2, **characterized in that** the separating clutch (150) is designed to be electromechanically actuatable.

6. A drive arrangement having a drive unit according to any one of Claims 1 to 5 and an internal combustion engine, which is or can be coupled to the rotor (111) of the first electric machine (110) for conjoint rotation.

7. The drive arrangement according to Claim 6, comprising a gearbox (160) or an input element of a wheel drive, wherein the internal combustion engine can be or is mechanically connected via the drive unit (100) to the gearbox (160) or the input element of the wheel drive via the separating clutch (150) of the drive unit (100).

8. The drive arrangement according to either of Claims 6 or 7, comprising a first gear ratio (142) between the internal combustion engine and a first shaft (130), connected to the rotor (111) of the first electric machine (110) for conjoint rotation, for the purpose of translating the rotational speed of the rotation implemented by the internal combustion engine to the first shaft (130).

## Revendications

1. Unité d'entraînement (100) destinée à la chaîne cinématique d'un véhicule automobile à entraînement électrique, en particulier d'un véhicule automobile hybride, avec une première machine électrique (110) ainsi qu'une deuxième machine électrique (120) et un arbre de sortie (140), un rotor (121) de la deuxième machine électrique (120) étant relié solidairement en rotation à l'arbre de sortie (140) et l'unité d'entraînement (100) présentant en outre un embrayage de séparation (150), avec lequel un rotor (111) de la première machine électrique (110) peut être relié à l'arbre de sortie (140) pour la transmission du couple, l'unité d'entraînement (100) présentant en outre un premier système d'écoulement (10) pour la réalisation d'un écoulement d'un premier liquide pour le refroidissement au moins partiel d'au moins une des machines électriques (110, 120), lequel est conçu de telle sorte que le premier liquide peut ainsi également être amené à l'embrayage de séparation (150) en vue de son refroidissement et/ou de sa lubrification, **caractérisée en ce que** le premier système d'écoulement (10) présente pour au moins chaque machine électrique (110, 120) une ramification (70) dans un premier chemin de refroidissement (71) et dans un deuxième chemin de refroidissement (72), de sorte que la machine électrique (110, 120) peut être refroidie dans un espace intérieur radial (73) formé par son rotor (111, 121) ainsi que sur son côté extérieur radial et **en ce que** l'unité d'entraînement (100) présente en outre un deuxième système d'écoulement (20) pour réaliser un écoulement d'un deuxième liquide, le premier système d'écoulement (10) et le deuxième système d'écoulement (20) étant disposés et conçus de telle sorte que la chaleur peut être transmise du premier liquide dans le premier système d'écoulement (10) au deuxième liquide dans le deuxième système d'écoulement (20).

2. Unité d'entraînement selon la revendication 1, **caractérisée en ce que** l'unité d'entraînement (100) comprend un échangeur de chaleur (40) pour transférer de la chaleur du premier liquide au second liquide.

3. Unité d'entraînement selon au moins l'une des revendications précédentes, **caractérisée en ce que** le premier système d'écoulement (10) et l'embrayage de séparation (150) sont disposés et conçus de telle sorte que le premier liquide peut être amené à l'embrayage de séparation (150) par le premier système d'écoulement (10) en vue de son actionnement hydraulique.

4. Unité d'entraînement selon la revendication 3, **caractérisée en ce qu'**elle présente une source de débit volumique (50), en particulier une pompe, un actionneur d'accouplement hydraulique en tant que système d'actionnement (153) pour l'actionnement de l'embrayage de séparation (150) et un dispositif de commutation avec lequel le débit volumique de liquide mis à disposition par la source de débit volumique (50) peut être amené séquentiellement à la machine électrique (110, 120) ou à l'actionneur d'accouplement.

5. Unité d'entraînement selon l'une quelconque des revendications 1 ou 2, **caractérisée en ce que** l'embrayage de séparation (150) est réalisé de manière à pouvoir être actionné électromécaniquement.

6. Système d'entraînement comprenant une unité d'entraînement selon l'une quelconque des revendications 1 à 5, ainsi qu'un moteur à combustion interne qui est ou peut être couplé solidaire en rotation au rotor (111) de la première machine électrique (110).

7. Système d'entraînement selon la revendication 6, comprenant une boîte de vitesse (160) ou un élément d'entrée d'un entraînement de roue, le moteur à combustion interne pouvant être relié ou étant relié mécaniquement par l'intermédiaire de l'unité d'entraînement (100) à la boîte de vitesse (160) ou à l'élément d'entrée de l'entraînement de roue par l'intermédiaire de l'embrayage de séparation (150) de l'unité d'entraînement (100).

8. Système d'entraînement selon l'une quelconque des revendications 6 et 7, comprenant, entre le moteur à combustion interne et un premier arbre (130) solidaire en rotation du rotor (111) de la première machine électrique (110), un premier étage de démultiplication (142) en vue de la transmission de la vitesse de rotation du mouvement de rotation réalisé par le moteur à combustion interne au premier arbre (130).
